# FASCICULE DE BREVET EUROPEEN

(11) **EP 1 754 412 B1**
(45) Date de publication et mention de la délivrance du brevet: **10.12.2008**
(21) Numéro de dépôt: 05300675.5
(22) Date de dépôt: 18.08.2005
(51) Int. Cl.: A01N 59/02, A01N 59/20, A01N 65/00

(54) **Procédé de traitement biologique des végétaux, notamment de la vigne et compositions adaptées**
Biologisches Verfahren zur Behandlung der Pflanzen, insbesondere der Weinstöcke und dafür verwendbare Zusammensetzungen
Biological process and suitable compositions for the treatment of plants, especially for vines

(43) Date de publication de la demande: 21.02.2007
(73) Titulaire: Getade Agri-Concept, 17130 Rouffignac (FR)
(72) Inventeur: Lachaise, Bernard, 17130, ROUFFIGNAC (FR)
(74) Mandataire: Fantin, Laurent

(56) Documents cités:
- FR-A- 1 394 087
- FR-A- 2 385 329
- FR-A- 2 866 202
- DATABASE ONLINE [Online] XP002374512 extrait de WWW.LAGROTECNICO.IT/FRA/DETT_NEWS.ASP?ID=3 3 - 8K -

## Description

La présente invention concerne un procédé de traitement phytosanitaire de végétaux, notamment de la vigne de façon biologique.

L'invention couvre aussi les compositions adaptées.

De façon générale en agrobiologie et plus particulièrement dans la vigne, les traitements sont effectués avec des produits utilisés à l'état pur et renouvelé autant que de besoin.

On constate comme pour les médicaments en pharmacie que les différents produits utilisés successivement ou conjointement peuvent présenter des interactions néfastes à leur efficacité.

Les différents modes d'application ont aussi une influence comme le moment d'application, ceci à l'instar des médicaments dont on sait pertinemment que l'efficacité est meilleure à un moment donné de la journée ou avec des conditions particulières d'ingestion.

Actuellement, le poudrage est pratiqué couramment dans le domaine de la vigne retenu comme exemple pratique, ceci dans les conditions suivantes :
- lutte contre l'oïdium : soufre fleur de 25 à 30 kg/ha
- lutte contre le mildiou : hydroxyde de cuivre 25 à 30 kg/ha,
- lutte contre le botrytis :
   ■ argile bentonitique 25 kg/ha
   ■ lithotamne fleur à 25 kg/ha
   ■ talc de luzenac à 25 kg/ha

On peut aussi recourir à la pulvérisation en lieu et place du poudrage.

Dans ce cas, on connaît des traitements du type :
- lutte contre l'oïdium : soufre mouillable dose de 6 à 12 kg/ha
- lutte contre le mildiou :
   ■ sulfate de cuivre 20 % : 2 à 6 kg/ha
   ■ hydroxyde de cuivre (500g/l) : 3 l/ha
   ■ oxyde de cuivre (500g/kg) : 2 à 5 kg/ha
   ■ tallate de cuivre (50g/l) : 21/ha comme adjuvant

Ces traitements ont une efficacité certaine mais dans le temps on constate une diminution de cette efficacité qui est essentiellement due à l' installation de souches résistantes de maladies.

Ces souches proviennent du fait de traitements répétitifs avec une très forte régularité.

De même, on a pu constater une hydromorphie de sols saturés en éléments fertilisants car il se produit des blocages provoqués par des déséquilibres.

Il convient d'analyser les sols tant en rapport Carbone/Azote qu'en taux de saturation donné par le rapport Calcium/Capacité d'échange cationique, le pH, l'eau et le taux de matière organique.

L'observation et l'étude des cycles accompagnés de leur traitement a permis de déterminer un calendrier particulier recourant à des traitements à partir de produits spécifiques permettant le traitement de végétaux et notamment de la vigne au cours du cycle complet de la végétation.

La mise en place d'un tel procédé de traitement permet d'éviter les maladies et donc d'obtenir une protection efficace des végétaux contre les maladies, en particulier en arboriculture, en viticulture, en cultures légumières et pour le houblon.

Ce procédé fait appel à des produits connus mais appliqués de façon adaptée et surtout en alternance choisie recourant à la pulvérisation et au poudrage.

Le procédé est maintenant décrit en détail suivant un mode de réalisation particulier, non limitatif.

Le choix s'est porté sur la vigne.

Le procédé consiste à intervenir aux différents stades de la végétation avec des produits adaptés.

### I/ Première étape :

A la sortie des feuilles, elle consiste en un nettoyage de printemps.

Cette première étape prévoit un traitement par pulvérisation avec une composition de nettoyage comprenant :
- bouillie nantaise comprise entre 2 et 6%. Cette bouillie nantaise est un composé sulfo-calcique à effet anti-cryptogamique agissant par absorption foliaire,
- fongicide tel que celui commercialisé par la société Agtrol sous la dénomination Champ flo à raison de 2 et 4%, lou du 0,5 l/ha, et/ou celui commercialisé par la société Biofa sous la dénomination Kraüterkiesel sous forme de billes végétales à diluer.
- silicate de sodium notamment celui commercialisé sous la dénomination commerciale oïkomb à raison de 0,5 l/ha

### II/ Deuxième étape

Intervention lorsque les grappes, ou les boutons dans l'arboriculture, sont visibles pour lutter contre le mildiou et l'oïdium en milieu acide et comprenant les traitements suivants, par pulvérisation sur les végétaux :
1/ Silicate d'aluminium et poudres de roches avec un mouillant à base d'essences de plantes tel que du fenouil, notamment le produit commercialisé sous la dénomination Ulmasud par la société Biofa, plus particulièrement à raison de 4 kg/ha.
   Adjonction complémentaire de :
   - soufre mouillable ou liquide tel que le produit commercialisé sous la dénomination Solfo Li 6 I/ha
   - ferment de céréales biologiques tel que celui commercialisé sous la marque déposée Kanne, à raison de 6l/ha, et/ou
2/ Lutte contre les parasites :
   - pose de pièges sexuels avec phéromones naturelles contre les vers de la grappe.
3/ Adjonction complémentaire :
   - composés anti-carentiels, notamment un engrais avec du soufre, du zinc, du cuivre, du bore, du manganèse, du cobalt, du fer et du magnésium. On connaît une composition commercialisée sous la dénomination Isoconcept comprenant 3% de soufre; 1,2% de zinc; 1,2% de cuivre; 0,1% de bore; 0,002% de cobalt, 0,5% de fer et 2% de magnésium utilisée dans ce cas à 5l/ha.

### III/ Troisième étape :

Interventions à réaliser lorsque les grappes, ou les boutons dans l'arboriculture, sont séparées, sont visibles pour lutter contre le mildiou et l'oïdium en milieu acide et comprenant les traitements suivants, par pulvérisation sur les végétaux :
1/ Silicate d'aluminium et poudres de roches avec un mouillant à base d'essence de fenouil, tel que le produit commercialisé sous la dénomination Ulmasud par la société Biofa.
   Adjonction complémentaire de :
   - soufre mouillable ou liquide tel que le produit commercialisé sous la dénomination Solfo Li 6 l/ha
   - ferment de céréales biologiques tel que celui commercialisé sous la marque déposée Kanne, à raison de 6l/ha.
2/ Lutte contre les parasites :
   - pose de pièges sexuels engluées avec phéromones naturelles contre les vers de la grappe, et
   - adjonction d'un bio insecticide pour traiter la 1^{ère} génération de parasites notamment celui utilisant le Bacillus Thuringiensis Kurstaki à 32 000 Ul/mg à 750 g/ha au début du piégeage.
   - De façon préférentielle, il convient de prévoir un nouveau traitement dans les mêmes conditions avec le même bio insecticide 10 jours après, toujours à 750 g/ha.
3/ Adjonction complémentaire :
   - composés anti-carentiels, notamment un engrais avec du soufre, du zinc, du cuivre, du bore, du manganèse, du cobalt, du fer et du magnésium. On connaît une composition commercialisée sous la dénomination Isoconcept comprenant 3% de soufre; 1,2% de zinc; 1,2% de cuivre; 0,1% de bore; 0,002% de cobalt, 0,5% de fer et 2% de magnésium, utilisée dans ce cas à 5l/ha.

### IV/ Quatrième étape :

Ces interventions s'effectuent au moment ou les boutons floraux, ou les boutons des grappes dans le cas de la vigne, sont apparents et séparés :
1/ Pour lutter contre le mildiou, le botrytis et l'oïdium, on réalise un traitement par poudrage d'une composition de lithothamne et/ou de cuivre et/ou de soufre et/ou de poudres de plantes micronisées.
   De préférence, on utilisera pour lutter particulièrement contre le mildiou une composition comprenant :
   - lithothamne : 47%
   - hydroxyde de cuivre : 27%
   - soufre (de préférence sous forme de soufre fleur fluidisé) : 26%
   - essence de fenouil : 0,2%
   De préférence, on utilisera pour lutter particulièrement contre le botrytis une composition comprenant :
   - lithothamne : 20%
   - soufre (de préférence sous forme de soufre fleur fluidisé) : 40%
   - bentonite : 40%
   - essence de fenouil : 0,2%
   De préférence, on utilisera pour lutter particulièrement contre l'oïdium une composition comprenant :
   - lithothamne : 20%
   - hydroxyde de cuivre : 2%
   - soufre (de préférence sous forme de soufre fleur fluidisé) : 78%
   - essence de fenouil : 0,2%.
      Ce poudrage est effectué à raison de 30 kg/ha.
   Ajout complémentaire de ferment de céréales biologiques tel que celui commercialisé sous la marque déposée Kanne, à raison de 4l/ha.
2/ Lutte contre les parasites :
   Aucune intervention complémentaire n'est nécessaire.
3/ Adjonction complémentaire :
   - adjonction d'une composition à assimilation par voie foliaire à base de bore, notamment celle commercialisée sous la dénomination MyrBore et/ou
   - composés anti-carentiels, notamment un engrais avec du soufre, du zinc, du cuivre, du bore, du manganèse, du cobalt, du fer et du magnésium. On connaît une composition commercialisée sous la dénomination Isoconcept comprenant 3% de soufre; 1,2% de zinc; 1,2% de cuivre; 0,1% de bore; 0,002% de cobalt; 0,5% de fer et 2% de magnésium utilisée dans ce cas à 5l/ha.

### V/ Cinquième traitement :

Intervention située à la chute des capuchons, c'est-à-dire 10 jours environ après la floraison pour lutter contre la nidification du Botrytis.

Cette intervention est effectuée par pulvérisation.
1/ Silicate d'aluminium et poudres de roches avec un mouillant à base d'essences de plantes, tel que le produit commercialisé sous la dénomination Ulmasud par la société Biofa, plus particulièrement à raison de 4kg/ha.
   Adjonction complémentaire de :
   - soufre mouillable ou liquide tel que le produit commercialisé sous la dénomination Solfo Li 6 l/ha et/ou
   - ferment de céréales biologiques tel que celui commercialisé sous la marque déposée Kanne, à raison de 4l/ha et/ou
   - du cuivre, notamment une composition, par exemple celui dénommé commercialement Labicuper à 8% de cuivre sous forme de gluconate à 3 l/ha et/ou un fongicide de la société, notamment celui commercialisé par la société Agtrol sous la dénomination Champ flo à raison de 2,5 l/ha.
2/ Lutte contre les parasites :
   Aucune intervention complémentaire n'est nécessaire.
3/ Adjonction complémentaire :
   - adjonction d'une composition à assimilation par voie foliaire à base de bore, notamment celle commercialisée sous la dénomination MyrBore à raison de 2l/ha et/ou
   - composés anti-carentiels, notamment un engrais avec du soufre, du zinc, du cuivre, du bore, du manganèse, du cobalt, du fer et du magnésium. On connaît une composition commercialisée sous la dénomination Isoconcept comprenant 3% de soufre; 1,2% de zinc; 1,2% de cuivre; 0,1% de bore; 0,002% de cobalt; 0,5% de fer et 2% de magnésium utilisée dans ce cas à 5l/ha.

### VI/ Sixième étape :

Cette étape intervient à la nouaison et s'effectue par poudrage plus particulièrement sur rosée ou en présence de brouillard.

La composition retenue comprend du lithothamne et/ou du cuivre et/ou du soufre et/ou de la poudre de plantes micronisées.

De préférence, on utilisera pour lutter particulièrement contre le mildiou une composition comprenant :
- lithothamne : 47%
- hydroxyde de cuivre : 27%
- soufre (de préférence sous forme de soufre fleur fluidisé) : 26%
- essence de fenouil : 0,2%

De préférence, on utilisera pour lutter particulièrement contre le botrytis une composition comprenant :
- lithothamne : 20%
- hydroxyde de cuivre : 40%
- bentonite : 40%
- essence de fenouil : 0,2%

De préférence, on utilisera pour lutter particulièrement contre l'oïdium une composition comprenant :
- lithothamne : 20%
- hydroxyde de cuivre : 2%
- soufre fluidisé : 78%
- essence de fenouil : 0,2%.

2/ Lutte contre les parasites :
   Adjonction d'un bio insecticide pour traiter la 2^{ème} génération, notamment celui utilisant le Bacillus Thuringiensis Kurstaki à 32 000 Ul/mg à 750 g/ha à 8 jours au pic du vol et nouvelle intervention 10 jours après toujours à 750 g/ha.
3/ Adjonction complémentaire :
   Adjonction d'une composition à assimilation par voie foliaire à base de bore, notamment celle commercialisée sous la dénomination MyrBore

### VII/ Septième étape :

Cette intervention est effectuée par pulvérisation au moment de la fermeture de la grappe ou du développement complet du fruit.
1/ Le silicate d'aluminium est supprimé et seuls sont appliqués les produits suivants :
   - soufre mouillable ou liquide tel que le produit commercialisé sous la dénomination Solfo Li à raison de 6 l/ha et/ou
   - ferment de céréales biologiques tel que celui commercialisé sous la marque déposée Kanne, à raison de 4l/ha, et/ou
   - du cuivre, notamment une composition, par exemple celui dénommé commercialement Labicuper à 8% de cuivre sous forme de gluconate à 3 I/ha et/ou un fongicide de la société, notamment celui commercialisé par la société Agtrol sous la dénomination Champ flo à raison de 2,5 l/ha.
2/ Lutte contre les parasites :
   Panneaux englués pour attraper les cicadelles (verte et flavescence dorée).
3/ Adjonction complémentaire :
   Adjonction d'une composition à assimilation par voie foliaire à base de bore, notamment celle commercialisée sous la dénomination MyrBore à raison de 2l/ha.

### VIII/ Huitième étape :

Afin de lutter contre le botrytis au moment de la véraison, ou de la maturité en arboriculture, cette étape consiste à renouveler le traitement par poudrage avec la composition suivante :
- lithothamne : 20%
- soufre (de préférence sous forme de soufre fleur fluidisé) : 40%
- bentonite : 40%
- essence de fenouil : 0,2%

En complément, il est aussi prévu de faire suivre ce traitement par poudrage d'un traitement par pulvérisation avec une composition adaptée du type :
- ferment de céréales biologiques tel que celui commercialisé sous la marque déposée Kanne, à raison de 4l/ha.
- du cuivre, notamment une composition, par exemple celui dénommé commercialement Labicuper à 8% de cuivre sous forme de gluconate à 3 l/ha et/ou un fongicide de la société, notamment celui commercialisé par la société Agtrol sous la dénomination Champ flo à raison de 2,5 l/ha.

### 2/ Lutte contre les parasites :

Pas de traitement spécifique.

### 3/ Adjonction complémentaire :

- composés anti-carentiels, notamment un engrais avec du soufre, du zinc, du cuivre, du bore, du manganèse, du cobalt, du fer et du magnésium. On connaît une composition commercialisée sous la dénomination Isoconcept comprenant 3% de soufre; 1,2% de zinc; 1,2% de cuivre; 0,1% de bore; 0,002% de cobalt; 0,5% de fer et 2% de magnésium utilisée dans ce cas à 5l/ha.

Cette adjonction est effectuée approximativement à 15 à 20% de véraison des baies.

En ce qui concerne la vigne, on peut prévoir une dernière étape optionnelle mais procurant, lorsqu'elle est réalisée, une qualité de travail optimisée pour préparer la vigne à la période hivernale.

Cette étape consiste en un traitement de cicatrisation des plaies occasionnées par la vendange mécanisée ou par la récolte mécanisée. Une solution adaptée consiste en une pulvérisation d'une solution de bouillie nantaise à raison de 6l/ha et du cuivre notamment sous forme d' hydroxyde de cuivre, par exemple celui dénommé commercialement Labicuper à 8% de cuivre sous forme de gluconate dosé à 3l/ha et d'un cicatrisant tel que celui dénommé commercialement Calcivigne.

## Revendications

1. Procédé de traitement phytosanitaire biologique de végétaux, notamment de la vigne, **caractérisé en ce que** l'on procède aux actions suivantes :
a) à sortie des feuillets nettoyage de printemps par application par pulvérisation d'une composition comprenant au moins :
- de la bouillie nantaise, et/ou
- au moins un fongicide, et/ou
- du silicate de sodium.
b) lorsque les grappes ou les boutons de fleurs sont visibles : traitement contre le mildiou et l'oïdium par application par pulvérisation d'une composition comprenant au moins :
- un silicate d'aluminium, poudres de roches et mouillant, et/ou
- du soufre mouillable ou liquide, et/ou
- d'un ferment de céréales biologiques
c) lorsque les grappes, ou les boutons dans l'arboriculture, sont séparés : traitement contre le mildiou et l'oïdium en milieu acide par application par pulvérisation d'une composition comprenant au moins :
- un silicate d'aluminium, poudres de roches et mouillant, et/ou
- du soufre mouillable ou liquide, et/ou
- d'un ferment de céréales biologiques
d) lorsque les boutons floraux des grappes, ou les fleurs dans l'arboriculture, sont apparents : traitement par poudrage avec une composition à base de lithothamne et/ou de cuivre et/ou de soufre et/ou de poudre de plantes micronisées.
e) à la chute des capuchons, ou des fleurs, traitement par pulvérisation contre la nidification du bothrytis avec une composition comprenant au moins :
- de silicate d'aluminium, de poudres de roches et d'un mouillant, et/ou
- de ferment de céréales biologiques, et/ou
- de cuivre.
f) au moment de la nouaison, traitement par poudrage avec une composition comprenant du lithotamne, et/ou du cuivre et/ou du soufre et/ou de la poudre de plantes.
g) au moment de la fermeture de la grappe, ou du développement complet du fruit en arboriculture, traitement par pulvérisation d'une composition comprenant au mains ;
- du soufre, et/ou
- ferment de céréales biologiques, et/ou
- du cuivre
h) au moment de la véraison, ou de la maturité dans l'arboriculture, traitement par poudrage avec une composition comprenant au moins :
- lithothamne
- soufre
- bentonite

2. Procédé de traitement phytosanitaire biologique de végétaux selon la revendication 1, **caractérisé en ce qu'**il comprend une étape supplémentaire après vendange ou récolte, de traitement de cicatrisation par pulvérisation d'une composition comprenant au moins :
- de la bouillie nantaise, et/ou
- du cuivre, et/ou
- un cicatrisant.

3. Procédé de traitement phytosanitaire biologique de végétaux selon la revendication 1 ou 2, **caractérisé en ce que** l'on ajoute des étapes de lutte conte les parasites aux étapes suivantes :
- pose à l'étape b) de pièges sexuels aux phéromones naturelles contre les vers
- pose à l'étape c) de pièges sexuels englués, aux phéromones naturelles contre les vers et adjonction d'un bioinsecticide notamment pour traiter la première génération de cicadelles, et/ou
- traitement à l'étape f) avec un bioinsecticide notamment pour traiter la seconde génération de cicadelles.

4. Procédé de traitement phytosanitaire biologique de végétaux selon la revendication 1, 2 ou 3, **caractérisé en ce qu'**il consiste à effectuer des adjonction complémentaire des éléments suivantes :
- à l'étape b), adjonction au moins de composés anti-carentiels avec des oligo-éléments choisis parmi le soufre, le zinc, le cuivre, le bore, le manganèse, le cobalt, te fer, le magnésium
- à l'étape c) adjonction au moins de composés anti-carentiels avec des oligo-éléments choisis parmi le soufre, le zinc, le cuivre, le bore, le manganèse, le cobalt, le fer, le magnésium
- à l'étape d) adjonction au moins d'une composition à assimilation par voie foliaire à base de bore
- à l'étape e) adjonction au moins d'une composition à assimilation par voie foliaire à base de bore

5. Procédé de traitement phytosanitaire biologique de végétaux selon l'une quelconque des revendications précédentes, **caractérisé en ce que** dans l'étape d) :
pour lutter contre le mildiou on utilise une composition comprenant :
- lithothamne : 47%
- hydroxyde de cuivre : 27%
- soufre (de préférence sous forme de soufre fleur fluidisé) : 26%
- essence de fenouil : 0,2%, et
pour lutter contre le botrytis on utilise une composition comprenant :
- lithothamne : 20%
- hydroxyde de cuivre : 40%
- bentonite : 40%
- essence de fenouil : 0,2% et
pour lutter contre l'oïdium on utilise une composition comprenant :
- lithothamne : 20%
- hydroxyde de cuivre : 2%
- soufre fluidisé : 78%
- essence de fenouil : 0,2%.

## Claims

1. A method for the biological phytosanitary treatment of plants, in particular vines, **characterised in that** the following actions are performed:
a) when the leaves emerge: spring-cleaning by applying, by spraying, a composition comprising at least:
- sulphur/lime mixture, and/or
- at least one fungicide, and/or
- sodium silicate;
b) when the clusters or buds of flowers are visible:
treatment against mildew and oidium by the application, by spraying, of a composition comprising at least:
- an aluminium silicate, rock powders and wetting agent, and/or
- wettable or liquid sulphur, and/or
- a ferment of biological cereals;
c) when the clusters, or the buds in arboriculture, are separated :
treatment against mildew and oidium in an acidic environment by the application, by spraying, of a composition comprising at least:
- an aluminium silicate, rock powders and wetting agent, and/or
- wettable or liquid sulphur, and/or
- a ferment of biological cereals;
d) when the floral buds of the clusters, or the flowers in arboriculture, are apparent: treatment by dusting with a composition based on lithothamnium and/or copper and/or sulphur and/or powder of micronized plants;
e) when the hoods, or flowers, drop off, treatment by spraying against nidification of botrytis with a composition comprising at least:
- aluminium silicate, rock powders and a wetting agent, and/or
- ferment of biological cereals, and/or
- copper;
f) at the time of the first fruit formation, treatment by dusting with a composition comprising lithothamnium, and/or copper and/or sulphur and/or plant powder;
g) at the time of closure of the cluster, or of complete development of the fruit in arboriculture, treatment by spraying a composition comprising at least:
- sulphur, and/or
- ferment of biological cereals, and/or
- copper;
h) at the time of ripening, or maturity in arboriculture, treatment by dusting with a composition comprising at least:
- lithothamnium
- sulphur
- bentonite.

2. A method for the biological phytosanitary treatment of plants according to claim 1, **characterised in that** it comprises a supplementary step after gathering or harvesting, of a healing treatment by spraying a composition comprising at least:
- a sulphur/lime mixture, and/or
- copper, and/or
- a healing substance.

3. A method for the biological phytosanitary treatment of plants according to claim 1 or 2, **characterised in that** steps of combatting parasites are added to the following steps:
- at step b) placing worm natural pheromone sexual traps,
- at step c) placing limed worm natural pheromone sexual traps and adding a bioinsecticide in particular for treating the first generation of Cicadellidae, and/or
- treatment at step f) with a bioinsecticide in particular for treating the second generation of Cicadellidae.

4. A method for the biological phytosanitary treatment of plants according to claim 1, 2 or 3, **characterised in that** it comprises performing supplementary additions of the following elements:
- at step b), addition of at least anti-deficiency compounds with oligo-elements chosen from sulphur, zinc, copper, boron, manganese, cobalt, iron and magnesium;
- at step c) addition at least of anti-deficiency compounds with oligo-elements chosen from sulphur, zinc, copper, boron, manganese, cobalt, iron and magnesium;
- at step d) addition at least of a composition based on boron for assimilation through the leaves,
- at step e) addition at least of a composition based on boron for assimilation through the leaves.

5. A method for the biological phytosanitary treatment of plants according to any one of the preceding claims, **characterised in that**, in step d):
in order to combat mildew, use is made of a composition comprising:
- lithothamnium: 47%
- copper hydroxide: 27%
- sulphur (preferably in the form of fluidised flower sulphur): 26%
- essence of fennel: 0.2%, and
to combat botrytis use is made a composition comprising:
- lithothamnium: 20%
- copper hydroxide: 40%
- bentonite: 40%
- essence of fennel : 0.2%, and
to combat oidium use is made of composition comprising:
- lithothamnium: 20%
- copper hydroxide: 2%
- fluidised sulphur: 78%
- essence of fennel: 0.2%.

## Patentansprüche

1. Verfahren zur biologischen Pflanzenschutzbehandlung von Pflanzen, insbesondere des Weinstocks, **dadurch gekennzeichnet, dass** folgende Handlungen vorgenommen werden:
a) beim Sprießen der Blätter: Behandlung im Frühjahr durch Besprühen mit einer Zusammensetzung mindestens umfassend:
- Schwefel-Kalk-Brühe und/oder
- mindestens ein Fungizid, und/oder
- Natriumsilikat.
b) wenn die Trauben oder die Blütenknospen sichtbar sind:
Bekämpfung von echtem und falschem Mehltau durch Besprühen mit einer Zusammensetzung mindestens umfassend:
- ein Aluminiumsilikat, Gesteinspulver und Netzmittel und/oder
- benetzbarer oder flüssiger Schwefel und/oder
- ein Ferment von biologischem Getreide
c) wenn die Trauben oder die Knospen im Obstbau separiert sind:
Bekämpfung von echtem und falschem Mehltau in saurem Milieu durch Besprühen mit einer Zusammensetzung mindestens umfassend:
- ein Aluminiumsilikat, Gesteinspulver und Netzmittel und/oder
- benetzbarer oder flüssiger Schwefel und/oder
- ein Ferment von biologischem Getreide
d) wenn die Blütenknospen der Trauben oder die Blüten im Obstbau erscheinen: Behandlung durch Bestäuben mit einer Zusammensetzung auf der Basis von Lithothamnium und/oder Kupfer und/oder Schwefel und/oder Pulver von mikronisierten Pflanzen.
e) bei dem Abfallen der Blütenkäppchen oder der Blüten, Behandlung durch Zerstäuben gegen das Einnisten des Botrytis mit einer Zusammensetzung mindestens umfassend:
- Aluminiumsilikat, Gesteinspulver und Netzmittel und/oder
- ein Ferment von biologischem Getreide, und/oder
- Kupfer.
f) beim Fruchtansatz, Behandlung durch Bestäuben mit einer Zusammensetzung umfassend Lithothamnium, und/oder Kupfer und/oder Schwefel und/oder Pflanzenpulver.
g) beim Schließen der Traube oder bei der vollständigen Entwicklung der Frucht im Obstbau, Behandlung durch Zerstäuben einer Zusammensetzung mindestens umfassend:
- Schwefel und/oder
- Ferment von biologischem Getreide, und/oder
- Kupfer.
h) wenn die Trauben oder das Obst im Obstbau reif sind, Behandlung durch Bestäuben mit einer Zusammensetzung mindestens umfassend:
- Lithothamnium
- Schwefel
- Bentonit.

2. Verfahren zur biologischen Pflanzenschutzbehandlung von Pflanzen nach Anspruch 1, **dadurch gekennzeichnet, dass** es nach der Lese oder der Ernte mindestens einen weiteren Schritt der Narbenbehandlung durch Zerstäuben einer Zusammensetzung mindestens umfassend:
- Schwefel-Kalk-Brühe und/oder
- Kupfer, und/oder
- einen Narbenbildner
umfasst.

3. Verfahren zur biologischen Pflanzenschutzbehandlung von Pflanzen nach Anspruch 1 oder 2, **dadurch gekennzeichnet, dass** den folgenden Schritten Schritte zur Parasitenbekämpfung hinzugefügt werden:
- in Schritt b), Einsatz von Fallen mit Sexuallockstoffen aus natürlichen Pheromonen gegen Würmer
- in Schritt c), Einsatz von geleimten Fallen mit Sexuallockstoffen auf der Basis von natürlichen Pheromonen gegen Würmer und Zugabe eines Bioinsektizids, insbesondere zur Behandlung der ersten Generation von Zikaden und/oder
- in Schritt f) Behandlung mit einem Bioinsektizid, insbesondere zur Behandlung der zweiten Generation von Zikaden.

4. Verfahren zur biologischen Pflanzenschutzbehandlung von Pflanzen nach Anspruch 1, 2 oder 3, **dadurch gekennzeichnet, dass** es darin besteht, folgende Elemente ergänzend hinzuzufügen:
- in Schritt b), Zugabe von mindestens Verbindungen gegen Mangelkrankheiten mit Spurenelementen ausgewählt aus der Gruppe umfassend Schwefel, Zink, Kupfer, Bor, Mangan, Kobalt, Eisen, Magnesium
- in Schritt c), Zugabe von mindestens Verbindungen gegen Mangelkrankheiten mit Spurenelementen ausgewählt aus der Gruppe umfassend Schwefel, Zink, Kupfer, Bor, Mangan, Kobalt, Eisen, Magnesium
- in Schritt d), Zugabe von mindestens einer Zusammensetzung mit Wirkung über Blattaufnahme auf der Basis von Bor
- in Schritt e), Zugabe von mindestens einer Zusammensetzung mit Wirkung über Blattaufnahme auf der Basis von Bor.

5. Verfahren zur biologischen Pflanzenschutzbehandlung von Pflanzen nach einem der vorstehenden Ansprüche, **dadurch gekennzeichnet, dass** in Schritt d):
zur Bekämpfung von falschem Mehltau eine Zusammensetzung umfassend:
- Lithothamnium: 47 %
- Kupferhydroxid: 27 %
- Schwefel (vorzugsweise in Form von fluidisierter Scbwefelblüte): 26%
- Fenchelessenz: 0,2 %
und zur Botrytisbekämpfung eine Zusammensetzung umfassend:
- Lithothamnium: 20 %
- Kupferhydroxid: 40 %
- Bentonit: 40 %
- Fenchelessenz: 0,2 % und
zur Bekämpfung von echtern Mehltau eine Zusammensetzung umfassend:
- Lithothamnium: 20 %
- Kupferhydroxid: 2 %
- fluidisierter Schwefel: 78 %
- Fenchelessenz: 0,2 %
verwendet wird.
